# EUROPEAN PATENT APPLICATION

(11) **EP 4 768 299 A1**
(43) Date of publication of application: **01.07.2026**
(21) Application number: 24861478.6
(22) Date of filing: 29.03.2024
(51) Int. Cl.: B60L 1/00, B60R 16/023

(54) **INTEGRATED DIRECT-DRIVE THERMAL MANAGEMENT CONTROLLER ARCHITECTURE FOR VEHICLE, AND VEHICLE MANAGEMENT SYSTEM AND VEHICLE**

(30) Priority: 08.09.2023 CN 202311166093
(71) Applicant: Contemporary Amperex Intelligence Technology (Shanghai) Limited, Shanghai 201306 (CN)
(72) Inventor: WU, Kai, Shanghai 201306 (CN); ZHANG, Dapeng, Shanghai 201306 (CN); REN, Shengguang, Shanghai 201306 (CN); LI, Xiuling, Shanghai 201306 (CN); ZHOU, Pengfei, Shanghai 201306 (CN); SUN, Yuefu, Shanghai 201306 (CN)
(74) Representative: Gong, Jinping
(86) International application number: PCT/CN2024/085015
(87) International publication number: WO 2025/050627

(57) **Abstract**

The present application discloses an integrated direct-drive thermal management controller architecture for a vehicle, a vehicle management system, and a vehicle. The integrated direct-drive thermal management controller architecture for a vehicle includes: a low-voltage battery (300), a battery management module (100), and a thermal management module (900), where the low-voltage battery (300) is connected to the battery management module (100), the thermal management module (900) is configured with a load connection terminal for connecting a thermal management load, and the battery management module (100) and the thermal management module (900) share the same controller (120). By integrating a function of managing the low-voltage battery (300) and a function of managing the thermal management load in the controller (120), a control module in a battery management scheme, and a control module and a drive module in a thermal management scheme are creatively integrated into the same controller (120), simplifying a control circuit, thereby achieving low costs and a simple architecture.

## Description

The present application refers to Chinese Patent Application No. 202311166093.0, filed on September 8, 2023 and entitled "INTEGRATED DIRECT-DRIVE THERMAL MANAGEMENT CONTROLLER ARCHITECTURE FOR VEHICLE, VEHICLE MANAGEMENT SYSTEM, AND AUTOMOBILE", which is incorporated herein by reference in its entirety.

### TECHNICAL FIELD

The present application relates to the field of automobile technologies, and in particular, to an integrated direct-drive thermal management controller architecture for a vehicle, a vehicle management system, and an automobile.

### BACKGROUND

The existing low-voltage power distribution in vehicle bodies mainly adopts discrete low-voltage lithium-ion battery technology, equipped with a fuse box product to achieve primary power distribution for thermal management loads, and then a battery management system performs battery management on the low-voltage lithium-ion battery.

However, in the current power supply architecture, the low-voltage power distribution system adopts discrete low-voltage lithium-ion battery technology, while a separate thermal management system solution is mounted on other circuit boards. The two products are independently arranged, which not only has problems of large size and inability to achieve integrated control, but also requires the design of more redundant devices for the two systems, thereby increasing system costs.

### TECHNICAL PROBLEM

In view of the above problems, the present application provides an integrated direct-drive thermal management controller architecture for a vehicle, a vehicle management system, and an automobile, which can solve the problems of large size, inability to achieve integrated control, and increased system costs caused by the independent arrangement of the battery management system and the thermal management system in the current vehicle power supply architecture.

### TECHNICAL SOLUTION

A first aspect of the embodiments of the present application provides an integrated direct-drive thermal management controller architecture for a vehicle, including: a low-voltage battery, a battery management module, and a thermal management module; where
the low-voltage battery is electrically connected to the battery management module;
the thermal management module is configured with a load connection terminal for connecting a thermal management load; and
the battery management module and the thermal management module share the same controller, and the controller integrates functions of managing the low-voltage battery and the thermal management load.

In the technical solution of the embodiments of the present application, the thermal management module is configured with a load connection terminal for connecting a thermal management load, the battery management module manages a charging and discharging process of the low-voltage battery, the thermal management module is controlled by the controller to manage the thermal management load, and the battery management module and the thermal management module share the same controller. By integrating a function of managing the low-voltage battery and a function of managing the thermal management load in the controller, the control modules in the battery management solution and the thermal management solution are creatively integrated into the same controller, simplifying the control lines, thereby achieving low cost and a simple architecture.

In some embodiments, the battery management module includes: a first switch module controlled by the controller; where
the first switch module is configured to manage the charging and discharging process of the low-voltage battery under the control of the controller.

In the technical solution of the embodiments of the present application, the first switch module is controlled by the controller, and the controller controls the switch state of the first switch module to perform the charging and discharging operation of the low-voltage battery, so that the thermal management module can reuse the first switch module, and the first switch module performs power distribution management on the thermal management module, reducing the wiring harness between the thermal management module and the battery management module and reducing the safety hazard caused by short circuit of the wiring harness between different circuit boards.

In some embodiments, the low-voltage battery is electrically connected to the thermal management module via the first switch module.

In the technical solution of the embodiments of the present application, the first switch module is connected between the low-voltage battery and the thermal management module, the low-voltage battery is electrically connected to the thermal management module via the first switch module, the first switch module is controlled by the controller, and the controller controls the switch state of the first switch module to control the switch state between the low-voltage battery and the thermal management module. The first switch module controls the power distribution output of the thermal management module, so that the thermal management module and the battery management module can reuse the first switch module, reducing the wiring harness between the thermal management module and the battery management module and reducing the safety hazard caused by short circuit of the wiring harness between different circuit boards.

In some embodiments, the controller is further connected to the thermal management load, and the controller is configured to send a thermal management control signal to the thermal management load to manage the thermal management load.

In the technical solution of the embodiments of the present application, the controller may be directly connected to the thermal management load and send a thermal management control signal to the thermal management load, and the thermal management load may adjust its own state according to the received thermal management control signal, achieving the purpose of thermal management of the vehicle under the condition of sharing the same controller with the battery management module.

In some embodiments, the thermal management module further includes: a plurality of thermal management drive units; where
the thermal management drive units are configured to manage the thermal management load according to a thermal management control instruction sent by the controller.

In the technical solution of the embodiments of the present application, the load connection terminal connects a plurality of thermal management loads. Each thermal management drive unit controls the state of the corresponding thermal management load according to the thermal management control instruction sent by the controller. The thermal management load does not need to connect to a separate power supply or a separate control line, thereby achieving direct drive of the thermal management load, simplifying the wiring layout of the thermal management load, and reducing the thermal management load path.

In some embodiments, the thermal management module further includes: a thermal management power distribution unit; where
the thermal management power distribution unit is connected to the battery management module and is configured to perform power distribution management on the plurality of thermal management drive units according to the power distribution instruction sent by the controller.

In the technical solution of the embodiments of the present application, the thermal management power distribution unit may perform power distribution management on the plurality of thermal management drive units according to the power distribution instruction sent by the controller, and the load connection terminal connects a plurality of thermal management loads. Each thermal management drive unit controls the state of the corresponding thermal management load according to the thermal management control instruction sent by the controller, achieving direct-drive thermal management control of the vehicle.

In some embodiments, the thermal management module further includes a plurality of sensor units, where the plurality of sensor units are configured to sample sampling nodes in the thermal management load to obtain a thermal management sampling signal and send the thermal management sampling signal to the controller; and the controller is further configured to adjust the state of the thermal management drive unit according to the thermal management sampling signal.

In the technical solution of the embodiments of the present application, the thermal management load is sampled by the sensor unit to obtain the working state of the thermal management load, and the controller determines whether the thermal management load is operating abnormally according to the sampled thermal management sampling signal, and adjusts the state of the thermal management drive unit in real time, reducing the probability of safety hazards in the entire vehicle.

In some embodiments, the thermal management drive unit includes at least one of a motor water pump control unit, a battery water pump control unit, an air conditioning water pump control unit, a fan control unit, a water valve control unit, an intake grille control unit, an expansion valve control unit, a cutoff valve control unit, a stepper motor control unit, and a blower control unit;
the motor water pump control unit is controlled by the controller and is configured to control and drive a motor water pump;
the battery water pump control unit is controlled by the controller and is configured to control and drive a battery water pump;
the air conditioning water pump control unit is controlled by the controller and is configured to control and drive an air conditioning water pump;
the fan control unit is controlled by the controller and is configured to control and drive an electronic fan;
the water valve control unit is controlled by the controller and is configured to control and drive a water valve;
the intake grille control unit is controlled by the controller and is configured to control and drive an active intake grille;
the expansion valve control unit is controlled by the controller and is configured to control and drive an expansion valve;
the cutoff valve control unit is controlled by the controller and is configured to control and drive a cutoff valve;
the stepper motor control unit is controlled by the controller and is configured to control and drive a single/bipolar stepper motor damper; and
the blower control unit is controlled by the controller and is configured to control and drive a blower.

In some embodiments, the integrated direct-drive thermal management controller architecture for a vehicle further includes:
a sampling module, configured to perform voltage sampling and/or current sampling on sampling nodes of the battery management module and the thermal management module and generate an electrical parameter sampling signal; and
the controller is connected to the sampling module, and the controller is further configured to control the working state of the low-voltage battery according to the electrical parameter sampling signal.

In the technical solution of the embodiments of the present application, a plurality of sampling nodes are provided in the battery management module and the thermal management module, the voltage or current of the plurality of sampling nodes is sampled to obtain an electrical parameter sampling signal, and the controller determines whether the voltage or current of the sampling node corresponding to the electrical parameter sampling signal meets the working condition of the current working state according to the received electrical parameter sampling signal, thereby controlling the working state of the low-voltage battery, so that the low-voltage battery can adjust the working state of the low-voltage battery in real time according to the electrical parameters of the sampling nodes in the battery management module and the thermal management module, reducing the safety hazard caused by current or voltage in the line exceeding a safety threshold.

In some embodiments, the controller is further configured to control the working state of the thermal management module according to the electrical parameter sampling signal.

In the technical solution of the embodiments of the present application, a plurality of sampling nodes are provided in the battery management module and the thermal management module, the voltage or current of the plurality of sampling nodes is sampled to obtain an electrical parameter sampling signal, and the controller determines whether the voltage or current of the sampling node corresponding to the electrical parameter sampling signal meets the working condition of the current working state according to the received electrical parameter sampling signal, thereby controlling the working state of the thermal management module, so that the thermal management module can adjust the working state in real time according to the electrical parameter sampling signal, and the working state of the thermal management load is controlled, reducing the safety hazard caused by current or voltage in the line exceeding a safety threshold.

In some embodiments, the sampling module is further configured to perform temperature sampling on sampling nodes of the low-voltage battery and the thermal management load to obtain a temperature sampling signal; and
the controller is further configured to control the working state of the low-voltage battery according to the temperature sampling signal.

In the technical solution of the embodiments of the present application, the controller determines whether the temperature of the sampling node corresponding to the sampling signal meets the working condition of the current working state according to the received temperature sampling signal, thereby controlling the working states of the battery management module and the thermal management module, so that the battery management module and the thermal management module can adjust the working states thereof in real time according to the temperature of sampling nodes thereof, reducing the safety hazard caused by line failure.

In some embodiments, the integrated direct-drive thermal management controller architecture for a vehicle further includes:
a low-voltage power input terminal electrically connected to the battery management module, configured to connect a low-voltage power supply converted from a power battery; and
the battery management module is further configured to perform charging and discharging control on the low-voltage battery according to the low-voltage power supply.

In the technical solution of the embodiments of the present application, the low-voltage power input terminal is configured to connect a low-voltage power supply obtained from the power battery through voltage conversion, and the battery management module controls the working state of the low-voltage battery according to the low-voltage power supply, achieving the purpose of protecting the battery and the load.

In some embodiments, the battery management module and the thermal management module are integrated on the same circuit board.

In the technical solution of the embodiments of the present application, the battery management module and the thermal management module share the same controller. The controller and a part of its peripheral drive devices form the battery management module to manage the state of the low-voltage battery, and the controller and the thermal drive devices form the thermal management module to manage the thermal management load. The battery management module and the thermal management module are integrated on the same circuit board, which is conducive to simplifying the lines and reducing the probability of wiring harness failure.

In some embodiments, the integrated direct-drive thermal management controller architecture for a vehicle further includes a vehicle heat dissipation plate; the circuit board is disposed on a first side of the vehicle heat dissipation plate, and the low-voltage battery is disposed on a second side of the vehicle heat dissipation plate, where the second side of the vehicle heat dissipation plate is opposite to the first side of the vehicle heat dissipation plate.

In the technical solution of the embodiments of the present application, the circuit board and the low-voltage battery are respectively disposed on two sides of the same vehicle heat dissipation plate. By sharing the same vehicle heat dissipation plate for the circuit board and the low-voltage battery, the heat dissipation efficiency inside the vehicle can be improved, and the volume of the vehicle can be reduced.

In some embodiments, the controller has at least two cores.

In the technical solution of the embodiments of the present application, the controller has at least two cores, and multiple functions of the controller can be allocated to multiple cores, improving the processing efficiency of the controller.

In some embodiments, at least one core of the controller is configured to process a sampling signal to obtain sampling data, and at least one core of the controller is configured to generate control data according to the sampling data and output a corresponding control signal based on the control data to control the working state of the low-voltage battery and/or control the working state of the thermal management load.

In the technical solution of the embodiments of the present application, the controller includes at least two cores, one or part of the cores can be configured to process the sampling signal to obtain corresponding sampling data, and the other core or another part of the cores can be configured to process the sampling data, obtain control data according to a preset operation, generate a control signal based on the control data and output the control signal to the peripheral drive device, control the working state of the low-voltage battery by controlling the working state of the drive device, and/or control the working state of the thermal management module by controlling the working state of the thermal drive device.

In some embodiments, the integrated direct-drive thermal management controller architecture for a vehicle includes:
an SBC power supply module connected to the controller, configured to supply power to the controller; where a power input terminal of the SBC power supply module is respectively connected to the low-voltage battery and the low-voltage power input terminal, and a power output terminal of the SBC power supply module is connected to the controller.

In the technical solution of the embodiments of the present application, the SBC power supply module is integrated in the battery management module, and the SBC power supply module is configured to supply power to the controller. The power source of the SBC power supply module may be the low-voltage battery; a power input terminal of the SBC power supply module may obtain power from the low-voltage battery or the low-voltage power input terminal respectively, and convert the voltage input from the low-voltage battery or the low-voltage power input terminal into the power supply voltage of the controller, achieving the purpose of supplying power to the controller and avoiding the problem of additional wiring harness required for the controller to obtain power from an external power supply.

In some embodiments, the controller controls a plurality of load connection terminals of the battery management module to be powered on in a time-sharing manner when a plurality of thermal management loads are connected to the load connection terminal.

In the technical solution of the embodiments of the present application, a plurality of load connection terminals of the battery management module can respectively connect a plurality of power-consuming loads. When a plurality of power-consuming loads are connected, the controller controls the plurality of load connection terminals to be powered on in a time-sharing manner, which can improve the output current of the battery management module and avoid the safety hazard caused by excessive output current when a plurality of load connection terminals are powered on simultaneously.

In some embodiments, the integrated direct-drive thermal management controller architecture for a vehicle further includes: an AFE module respectively connected to the low-voltage battery and the controller, configured to perform information collection on the low-voltage battery and perform information interaction with the controller.

In the technical solution of the embodiments of the present application, the AFE module is simultaneously connected to the low-voltage battery and the controller, where information collection may be performed on the low-voltage battery through the AFE module and information interaction is performed with the controller.

In some embodiments, the controller is connected to the AFE module through a non-multiplexed synchronous serial communication interface.

In the technical solution of the embodiments of the present application, the controller is connected to the AFE module through a non-multiplexed synchronous serial communication interface, which can establish high-speed full-duplex communication between the controller and the AFE module. The data pin of the controller performs data transmission of a set type. For example, each communication module corresponds to an interactive function module, which is not affected by other pins or modules.

In some embodiments, the battery management module includes: a first switch module controlled by the controller; where
the low-voltage battery is electrically connected to the load connection terminal via the first switch module.

In the technical solution of the embodiments of the present application, the first switch module is connected between the low-voltage battery and the battery management module, the first switch module is controlled by the controller, and the controller controls the switch state of the first switch module to perform the charging and discharging operation of the low-voltage battery, so that the battery management module and the thermal management module can reuse the first switch module, reducing the wiring harness between the battery management module and the battery management module and reducing the safety hazard caused by short circuit of the wiring harness between different circuit boards.

A second aspect of the embodiments of the present application further provides a vehicle management system, where the vehicle management system includes the integrated direct-drive thermal management controller architecture for a vehicle according to any one of the above embodiments.

A third aspect of the embodiments of the present application further provides an automobile, where the automobile includes the integrated direct-drive thermal management controller architecture for a vehicle according to any one of the above embodiments.

The foregoing descriptions are merely an overview of the technical solution of the present application. For a better understanding of the technical means in the present application such that they can be implemented according to the content of the specification, and to make the above and other objectives, features and advantages of the present application more obvious and easier to understand, the following describes specific embodiments of the present application.

### BENEFICIAL EFFECTS

In the technical solution of the embodiments of the present application, by integrating the integrated direct-drive thermal management controller architecture for a vehicle described in any one of the above embodiments in an automobile, the battery management module and the thermal management module can be integrated into one structural member, and the battery management module and the thermal management module reuse the same controller, optimizing the electrical architecture of the vehicle power distribution system, simplifying related components of the entire vehicle, and greatly reducing the cost of the entire vehicle.

### DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit the present application. In addition, in all the accompanying drawings, the same reference signs represent the same components. In the accompanying drawings:
FIG. 1 is a first schematic structural diagram of an integrated direct-drive thermal management controller architecture for a vehicle according to an embodiment of the present application;
FIG. 2 is a second schematic structural diagram of an integrated direct-drive thermal management controller architecture for a vehicle according to an embodiment of the present application;
FIG. 3 is a third schematic structural diagram of an integrated direct-drive thermal management controller architecture for a vehicle according to an embodiment of the present application;
FIG. 4 is a fourth schematic structural diagram of an integrated direct-drive thermal management controller architecture for a vehicle according to an embodiment of the present application;
FIG. 5 is a fifth schematic structural diagram of an integrated direct-drive thermal management controller architecture for a vehicle according to an embodiment of the present application;
FIG. 6 is a sixth schematic structural diagram of an integrated direct-drive thermal management controller architecture for a vehicle according to an embodiment of the present application;
FIG. 7 is a seventh schematic structural diagram of an integrated direct-drive thermal management controller architecture for a vehicle according to an embodiment of the present application;
FIG. 8 is an eighth schematic structural diagram of an integrated direct-drive thermal management controller architecture for a vehicle according to an embodiment of the present application; and
FIG. 9 is a ninth schematic structural diagram of an integrated direct-drive thermal management controller architecture for a vehicle according to an embodiment of the present application.

### EMBODIMENTS OF INVENTION

The following describes in detail some embodiments of technical solutions of the present application with reference to the accompanying drawings. The following embodiments are merely intended for a clearer description of the technical solutions of the present application and therefore are merely used as examples which do not constitute any limitation on the protection scope of the present application.

Unless otherwise defined, all technical and scientific terms used herein shall have the same meanings as commonly understood by persons skilled in the art to which the present application relates. The terms used herein are intended to merely describe the specific embodiments rather than to limit the present application. The terms "include", "comprise", and "have" and any other variations thereof in the specification, claims and brief description of drawings of the present application are intended to cover non-exclusive inclusions.

In the descriptions of some embodiments of the present application, the technical terms "first", "second", and the like are merely intended to distinguish between different objects, and shall not be understood as any indication or implication of relative importance or any implicit indication of the number, specific sequence, or primary-secondary relationship of the technical features indicated. In the description of the embodiments of the present application, "a plurality of" means at least two unless otherwise specifically defined.

In this specification, reference to "embodiment" means that specific features, structures, or characteristics described with reference to the embodiment may be included in at least one embodiment of the present application. The word "a second connection port" appearing in various places in the specification does not necessarily refer to the same embodiment or an independent or alternative embodiment that is exclusive of other embodiments. It is explicitly or implicitly understood by persons skilled in the art the embodiments described herein may be combined with other embodiments.

In the description of some embodiments of the present application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the descriptions of the embodiments of the present application, the term "multiple frames" means more than two (inclusive).

In the description of the embodiments of the present application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of the present application rather than indicating or implying that the means or components mentioned must have specific orientations or must be constructed or manipulated according to specific orientations, and therefore shall not be construed as any limitation on the embodiments of the present application.

In the related art, the low-voltage power distribution system adopts discrete low-voltage lithium-ion battery technology, while a separate thermal management system solution is mounted on other circuit boards. The two products are independently arranged, which not only has problems of large size and inability to achieve integrated control, but also requires the design of more redundant devices for the two systems, thereby increasing system costs. For example, in the current power supply of the entire vehicle, regional controllers are usually used to respectively control various functional modules inside the entire vehicle. Therefore, each functional module requires an independent controller to process data and control the devices in the functional module. Similarly, each functional module also requires an independent SBC module to supply power to the controller, and an independent AFE module is also required to establish communication between the control module and the upper computer. The related control architecture not only requires a large number of wiring harness connections, but also has problems such as large size and inconvenient maintenance.

In order to solve the above technical problems, the embodiments of the present application provide an integrated direct-drive thermal management controller architecture for a vehicle, where the integrated direct-drive thermal management controller architecture for a vehicle includes: a low-voltage battery 300, a battery management module 100, and a thermal management module 900. The low-voltage battery 300 is connected to the battery management module 100, the battery management module 100 achieves charging and discharging management of the low-voltage battery 300, and a load connection terminal 210 for connecting a thermal management load is configured in the thermal management module 900, achieving working management of the thermal management load by the thermal management module 900. The thermal management module 900 can control the working state of the thermal management load, where the battery management module 100 and the thermal management module 900 share the same controller 120, and the controller 120 integrates functions of managing the low-voltage battery 300 and the thermal management load.

In this embodiment, the thermal management load can be configured to control the temperature of various nodes in the entire vehicle. For example, the thermal management load includes an air conditioning water pump, a motor water pump, and the like; the air conditioning water pump is configured to regulate the temperature of the vehicle air conditioning; and the motor water pump is configured to regulate the temperature of the vehicle motor. The battery management module 100 and the thermal management module 900 share the same controller 120, that is, the battery management module 100 and the thermal management module 900 include the same controller 120. The battery management module 100 manages the charging and discharging of the low-voltage battery 300. For example, the battery management module 100 configures the output power of the low-voltage battery 300 according to the power demand of the output terminal of the battery management module 100, or can charge the low-voltage battery 300 when an external power supply is connected. The thermal management module 900 manages the thermal management load. By integrating a function of managing the low-voltage battery 300 and the thermal management load in the controller 120, the control modules in the battery management solution and the thermal management solution are creatively integrated into the same controller 120, integrating reusable parts in the battery management solution and the thermal management solution and simplifying the control lines, thereby achieving low cost and a simple architecture.

In some specific application embodiments, in the vehicle low-voltage power distribution system, the controller 120 and a part of power devices form the battery management module 100. In the vehicle thermal management system, the controller 120 and its external thermal management drive unit form the thermal management module 900. In this embodiment, by integrating the vehicle low-voltage power distribution system and the vehicle thermal management system, the same controller 120 achieves control and management of the vehicle low-voltage power distribution system and the thermal management system. By integrating a function of managing the low-voltage battery 300 and the thermal management load and a function of power distribution control on the low-voltage load in the controller 120, not only the communication wiring harness provided between the independent low-voltage power distribution system and the independent thermal management system is reduced, but also an independent controller and related SBC power supply chips are not required, saving the quantity of chips used and reducing the probability of failure of power and communication wiring harnesses in the vehicle low-voltage power distribution system.

In this embodiment, the controller 120 integrates functions of managing the low-voltage battery 300 and the thermal management load. After the entire vehicle is started, the controller 120 can manage the energy output of the entire vehicle low-voltage power distribution system based on the thermal management feedback information of the vehicle, or can manage the working state of the thermal management load based on the energy output of the entire vehicle low-voltage power distribution system, so that the vehicle low-voltage power distribution system and the vehicle thermal management system are mutually adapted based on the current vehicle condition, improving the power utilization efficiency and power supply stability of the entire vehicle low-voltage power distribution system.

In some specific application embodiments, the controller 120 and a part of power devices form the battery management module 100, and the controller 120 and the thermal management drive unit form the thermal management module 900. A large fuse box is not required, and the battery management module 100, the thermal management module 900, and the low-voltage battery 300 can be further integrated into a low-voltage battery assembly, which not only reduces the volume of the vehicle low-voltage power distribution system and the vehicle thermal management system, but also shortens the wiring harness distance between the low-voltage battery 300 and the battery management module 100, reducing the probability of failure of power and communication wiring harnesses in the vehicle low-voltage power distribution system and the thermal management system.

In some embodiments, the battery management module 100 can be configured with a plurality of load connection terminals 210, and the plurality of load connection terminals 210 can be configured to connect not only to thermal management loads but also to other low-voltage loads (such as a sensor or other small-current power-consuming loads), and the output power of the load connection terminals 210 is controlled by the battery management module 100.

In some embodiments, the thermal management module 900 can be powered by the low-voltage battery 300 or an externally connected low-voltage power supply.

In this embodiment, the integrated direct-drive thermal management controller architecture for a vehicle in this embodiment may further include a low-voltage power input terminal, the low-voltage power input terminal can connect to a low-voltage power supply converted from a power battery, and the thermal management module 900 can be powered by the low-voltage battery 300 or the low-voltage power supply. For example, the direct current output by the low-voltage battery 300 or the low-voltage power supply is output to the load connection terminal 210 and output to the thermal management load via the load connection terminal 210.

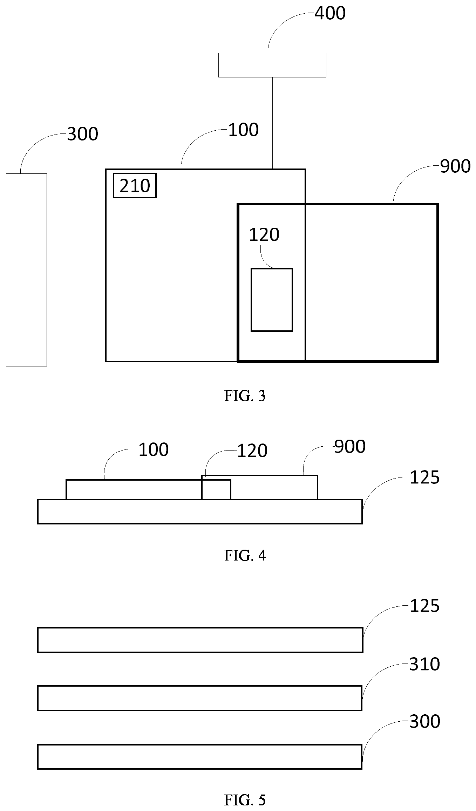

In some embodiments, as shown in FIG. 3, the battery management module 100 includes a first switch module 101, and the first switch module 101 is configured to manage the charging and discharging process of the low-voltage battery 300 under the control of the controller 120.

In this embodiment, the first switch module 101 is controlled by the controller 120, and the controller 120 controls the switch state of the first switch module 101 to perform the charging and discharging operation of the low-voltage battery 300, so that a low-voltage power distribution module 200 can reuse the first switch module 101 as its power distribution management unit, without providing a power distribution management device in the low-voltage power distribution module 200, thereby reducing the wiring harness between the low-voltage power distribution module 200 and the battery management module 100, and reducing the safety hazard caused by short circuit of the wiring harness between different circuit boards.

In some specific application embodiments, the first switch module 101 and the controller 120 form the battery management module 100, and the low-voltage battery 300 is connected to the low-voltage power distribution module 200 via the first switch module 101. Connecting the low-voltage battery 300 and the low-voltage power distribution module 200 through the first switch module 101 not only allows the low-voltage power distribution module 200 to reuse the first switch module 101 to regulate and manage the current input to the low-voltage power distribution module 200, but also provides short circuit protection for the low-voltage battery 300, reducing the safety hazard caused by failure of the low-voltage battery 300.

In some embodiments, the low-voltage battery 300 is electrically connected to the low-voltage power distribution module 200 via the first switch module 101.

In this embodiment, the first switch module 101 is connected between the low-voltage battery 300 and the low-voltage power distribution module 200, the low-voltage battery 300 is electrically connected to the low-voltage power distribution module 200 via the first switch module 101, the first switch module 101 is controlled by the controller 120, and the controller 120 controls the switch state of the first switch module 101 to control the switch state between the low-voltage battery 300 and the low-voltage power distribution module 200. The first switch module 101 controls the power distribution output of the low-voltage power distribution module 200, so that the low-voltage power distribution module 200 and the battery management module 100 can reuse the first switch module 101, reducing the wiring harness between the low-voltage power distribution module 200 and the battery management module 100, and reducing the safety hazard caused by short circuit of the wiring harness between different circuit boards.

In some embodiments, the controller 120 is further connected to the thermal management load, and the controller 120 is configured to send a thermal management control signal to the thermal management load to manage the thermal management load.

In this embodiment, the controller 120 may be directly connected to the thermal management load and send a thermal management control signal to the thermal management load, and the thermal management load may adjust its own state according to the received thermal management control signal, achieving the purpose of thermal management of the vehicle under the condition of sharing the same controller with the battery management module 100.

In some embodiments, the thermal management module 900 includes a plurality of thermal management drive units, where the thermal management drive units are configured to manage the thermal management load according to a thermal management control instruction sent by the controller 120.

In this embodiment, the load connection terminal 210 connects a plurality of thermal management loads. Each thermal management drive unit controls the state of the corresponding thermal management load according to the thermal management control instruction sent by the controller. The thermal management load does not need to connect to a separate power supply or a separate control line, thereby achieving direct drive of the thermal management load, simplifying the wiring layout of the thermal management load, and reducing the thermal management load path.

In one embodiment, the thermal management module 900 further includes a thermal management power distribution unit, where the thermal management power distribution unit is connected to the battery management module 100. The thermal management power distribution unit performs power distribution management on the plurality of thermal management drive units according to the power distribution instruction sent by the controller 120.

In this embodiment, the thermal management power distribution unit may perform power distribution management on a plurality of thermal management drive units according to the power distribution instruction sent by the controller, and the load connection terminal 210 connects a plurality of thermal management loads. Each thermal management drive unit controls the state of the corresponding thermal management load according to the thermal management control instruction sent by the controller. The thermal management load does not need to connect to a separate power supply or a separate control line, thereby achieving direct drive of the thermal management load, simplifying the wiring layout of the thermal management load, and reducing the thermal management load path.

In some embodiments, the thermal management module 900 further includes a thermal management power distribution unit, where the thermal management power distribution unit is connected to the battery management module 100. The thermal management power distribution unit performs power distribution management on a plurality of thermal management drive units according to the power distribution instruction sent by the controller.

In this embodiment, the thermal management power distribution unit may perform power distribution management on a plurality of thermal management drive units according to the power distribution instruction sent by the controller 120, the load connection terminal 210 connects a plurality of thermal management loads. Each thermal management drive unit controls the state of the corresponding thermal management load according to the thermal management control instruction sent by the controller 120, achieving direct-drive thermal management control of the vehicle.

In some embodiments, the thermal management power distribution unit may include a plurality of power devices, where the plurality of power devices form a switch circuit, and the switch circuit is configured to output the low-voltage direct current output by the low-voltage battery 300 to a plurality of thermal management drive units and is controlled by the controller 120 to manage the power supply state of each thermal management drive unit.

In some embodiments, the thermal management module 900 further includes a plurality of sensor units, where the plurality of sensor units are configured to sample sampling nodes in the thermal management load to obtain a thermal management sampling signal and send the thermal management sampling signal to the controller 120, and the controller 120 is further configured to adjust the state of the thermal management drive unit according to the thermal management sampling signal.

In this embodiment, the thermal management load is sampled by the sensor unit to obtain the working state of the thermal management load, and the controller determines whether the thermal management load is operating abnormally according to the sampled thermal management sampling signal, and adjusts the state of the thermal management drive unit in real time, reducing the probability of safety hazards in the entire vehicle.

In some embodiments, the thermal management drive unit includes at least one of a motor water pump control unit, a battery water pump control unit, an air conditioning water pump control unit, a fan control unit, a water valve control unit, an intake grille control unit, an expansion valve control unit, a cutoff valve control unit, a stepper motor control unit, and a blower control unit.

Specifically, the motor water pump control unit is controlled by the controller 120 and is configured to control and drive a motor water pump; the battery water pump control unit is controlled by the controller 120 and is configured to control and drive a battery water pump; the air conditioning water pump control unit is controlled by the controller 120 and is configured to control and drive an air conditioning water pump; the fan control unit is controlled by the controller 120 and is configured to control and drive an electronic fan; the water valve control unit is controlled by the controller 120 and is configured to control and drive a water valve; the intake grille control unit is controlled by the controller 120 and is configured to control and drive an active intake grille; the expansion valve control unit is controlled by the controller 120 and is configured to control and drive an expansion valve; the cutoff valve control unit is controlled by the controller 120 and is configured to control and drive a cutoff valve; the stepper motor control unit is controlled by the controller 120 and is configured to control and drive a single/bipolar stepper motor damper; and the blower control unit is controlled by the controller 120 and is configured to control and drive a blower.

In some embodiments, the motor water pump control unit, the battery water pump control unit, the air conditioning water pump control unit, the fan control unit, the water valve control unit, the intake grille control unit, the expansion valve control unit, the cutoff valve control unit, the stepper motor control unit, and the blower control unit may be switch devices, or may be full-bridge drive circuits or half-bridge drive circuits.

A full-bridge drive circuit may also be referred to as an H-bridge drive circuit having four switching arms in total, where the switching arms may be MOS transistors or triodes, and the four switching arms are controlled by the controller 120. The controller 120 provides corresponding drive control signals to control the switch states of the four switching arms, thereby controlling the drive current output by the full-bridge drive circuit, and achieving the purpose of managing the thermal management load connected to the full-bridge drive circuit.

In the field of power electronics, a full-bridge drive circuit achieves forced conversion frequency and direction of a motor by controlling the conduction and cutoff of four switching transistors (such as, MOS transistors, triodes, and the like), and its control signal may achieve PWM modulation to achieve different speeds and steering control of the motor. Half-bridge drive achieves speed and steering control of the motor by controlling the conduction and cutoff of two switching transistors, and the control signal may also achieve PWM modulation. Half-bridge drive is suitable for low-power motor drive, such as electronic fans.

Half-bridge gate drivers are widely used in various alternating current drivers, direct current-to-direct current converters, and other power control occasions. Full-bridge drive and half-bridge drive are both circuits configured to control motors or other loads and use MOSFET transistors as switches to control the current of the thermal management load.

In some embodiments, the thermal management load includes at least one of a motor water pump, a battery water pump, an air conditioning water pump, an electronic fan, a water valve, an active intake grille, an expansion valve, a cutoff valve, a single/bipolar stepper motor damper, and a blower.

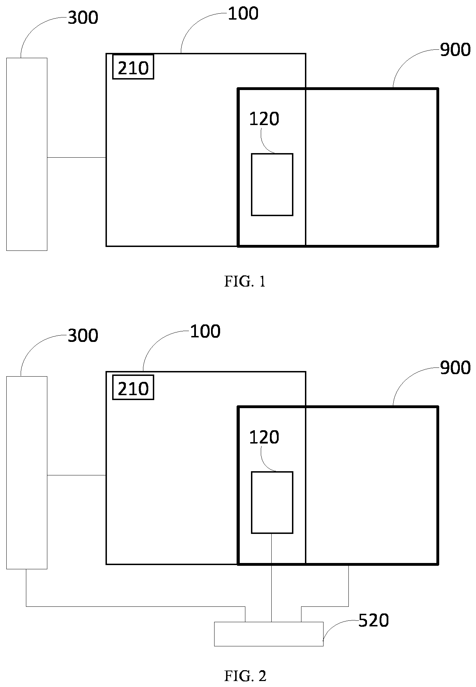

In some embodiments, as shown in FIG. 2, the integrated direct-drive thermal management controller architecture for a vehicle further includes a sampling module 520, where the sampling module 520 is configured to perform voltage sampling on sampling nodes of the battery management module 100 and the thermal management module 900 and generate an electrical parameter sampling signal. The controller 120 is connected to the sampling module 520, and the controller 120 is further configured to control the working state of the low-voltage battery 300 according to the electrical parameter sampling signal.

In this embodiment, a plurality of sampling nodes are provided in the battery management module 100 and the thermal management module 900, and the voltage of the plurality of sampling nodes is sampled to obtain a corresponding electrical parameter sampling signal, achieving state monitoring of the low-voltage battery 300 and the thermal management load. The controller 120 determines whether the voltage of the sampling node corresponding to the electrical parameter sampling signal meets the working condition of the current working state according to the received electrical parameter sampling signal, thereby controlling the working state of the battery management module 100 by the controller 120, so that the battery management module 100 can adjust the parameters of the low-voltage battery 300 in real time according to the electrical parameters of the sampling nodes, reducing the safety hazard caused by voltage in the line exceeding a safety threshold. For example, when the voltage at an input node of the battery management module 100 is undervoltage, the output voltage or output current of the low-voltage battery 300 is increased through the battery management module 100, achieving the purpose of increasing the output power of the low-voltage battery 300 according to the power demand of the load terminal.

In some embodiments, the sampling module 520 is configured to perform current sampling on sampling nodes of the battery management module 100 and the thermal management module 900 and generate an electrical parameter sampling signal. The controller 120 is further configured to control the working state of the battery management module 100 according to the electrical parameter sampling signal.

In this embodiment, a plurality of sampling nodes are provided in the battery management module 100 and the thermal management module 900, and the current of the plurality of sampling nodes is sampled to obtain an electrical parameter sampling signal. The controller 120 determines whether the current of the sampling node corresponding to the sampling signal meets the working condition of the current working state according to the received electrical parameter sampling signal, thereby controlling the working state of the battery management module 100, so that the battery management module 100 can adjust the working state of the low-voltage battery 300 in real time according to the electrical parameters of the low-voltage battery 300 and the thermal management module 900, reducing the safety hazard caused by line failure. For example, when the current at an input node of the battery management module 100 is excessive, the charging current of the battery management module 100 to the low-voltage battery 300 can be reduced by controlling the working state of the battery management module 100, reducing the risk of safety hazard to the battery caused by excessive charging current.

In some embodiments, the sampling module 520 is configured to perform current sampling and voltage sampling on sampling nodes of the low-voltage battery 300, the battery management module 100, and the thermal management module 900 and generate an electrical parameter sampling signal. The controller 120 is further configured to control the working state of the battery management module 100 according to the electrical parameter sampling signal.

In this embodiment, a plurality of sampling nodes are provided in the low-voltage battery 300, the battery management module 100, and the thermal management module 900, and the voltage or current of the plurality of sampling nodes is sampled to obtain a sampling signal. The controller 120 determines whether the voltage or current of the sampling node corresponding to the sampling signal meets the working condition of the current working state according to the received sampling signal, thereby controlling the working state of the battery management module 100, so that the battery management module 100 can adjust the working state in real time according to the electrical parameters of the low-voltage battery 300, the battery management module 100, and the thermal management module 900, reducing the safety hazard caused by line failure or failure of the low-voltage battery 300.

For example, when the voltage at an output node of the battery management module 100 is undervoltage or the output node of the battery management module 100 is overloaded, by controlling the working state of the battery management module 100, the low-voltage battery 300 and a low-voltage power input terminal 400 can be simultaneously connected, thereby increasing the input power of the battery management module 100, achieving the purpose of adjusting the input power according to the load demand power of the output terminal, and reducing the risk of safety hazard caused by overload of the output terminal.

In some embodiments, the controller 120 is further configured to control the working state of the thermal management module 900 according to the electrical parameter sampling signal.

In this embodiment, a plurality of sampling nodes are provided in the low-voltage battery 300, the battery management module 100, and the thermal management module 900, and the voltage or current of the plurality of sampling nodes is sampled to obtain a sampling signal. The controller 120 determines whether the voltage or current of the sampling node corresponding to the sampling signal meets the working condition of the current working state according to the received sampling signal, thereby controlling the working state of the thermal management drive unit, so that the thermal management drive unit can adjust the working state in real time according to the sampling signal, controlling the working state of the thermal management load, and reducing the safety hazard caused by overload of the thermal management load.

In some embodiments, the sampling module 520 is further configured to perform temperature sampling on sampling nodes of the low-voltage battery 300 and the thermal management load to obtain a temperature sampling signal; and the controller 120 is further configured to control the working state of the low-voltage battery 300 according to the temperature sampling signal.

In this embodiment, the controller 120 determines whether the temperature of the sampling node corresponding to the sampling signal meets the working condition of the current working state according to the received temperature sampling signal, thereby controlling the working states of the battery management module 100 and the thermal management module 900, so that the battery management module 100 and the thermal management module 900 can adjust the working states thereof in real time according to the temperature of sampling nodes thereof, reducing the safety hazard caused by excessive temperature inside the vehicle.

In some embodiments, as shown in FIG. 3, the integrated direct-drive thermal management controller architecture for a vehicle in this embodiment further includes a low-voltage power input terminal 400, where the low-voltage power input terminal 400 is electrically connected to the battery management module 100, and the low-voltage power input terminal 400 can be configured to connect a low-voltage power supply converted from a power battery. The battery management module 100 performs charging control on the low-voltage battery according to the input low-voltage power supply, or can perform power allocation on the input low-voltage power supply and output to the load connection terminal 210.

In this embodiment, the low-voltage power input terminal 400 is configured to connect a low-voltage power supply conversion from the power battery through voltage conversion, and the battery management module 100 allocates the low-voltage power supply to the load connection terminal 210. For example, in the case of a plurality of load connection terminals 210, power allocation is performed according to the power demand of the load connected by each load connection terminal 210, or power allocation may be performed according to the working state of the connected load, achieving dynamic adjustment of the output power of the low-voltage power supply and achieving the purpose of protecting the battery and the load.

In some embodiments, as shown in FIG. 4, the integrated direct-drive thermal management controller architecture for a vehicle includes a circuit board 125, where the battery management module 100 and the thermal management module 900 are integrated on the circuit board 125, and the controller 120 is also integrated on the circuit board 125.

In this embodiment, since the battery management module 100 and the thermal management module 900 share the same controller 120, the controller 120 and the thermal drive device form the thermal management module 900, and the controller 120 and other drive devices form the battery management module 100. The controller 120 is welded on the circuit board 125 and connected to the thermal drive device and the drive devices through traces on the circuit board. The controller 120 sends a thermal drive control signal to the thermal drive device to perform the function of managing the thermal management load, which can reduce packet loss caused by data communication between circuit boards. The controller 120 and a part of its peripheral drive devices form the battery management module 100 to manage the state of the low-voltage battery 300, achieving charging and discharging management of the low-voltage battery 300. This can avoid the problem of requiring a large quantity of wiring harness connections between circuit boards caused by the independent arrangement of the original battery management module 100 and the thermal management module 900, reducing the probability of wiring harness failure by simplifying the lines.

In some embodiments, the external pins of the controller 120 can form not only the battery management module 100 with the drive devices on the circuit board 125 and form the thermal management module 900 with the thermal drive devices on the circuit board 125, but also form a low-voltage power distribution module with related devices on its periphery, achieving the effect of drive solution expansion.

In some embodiments, the controller 120 can also expand its external pins. For example, by welding its external expansion pins on an extension line on the circuit board 125 and connecting the extension line on the circuit board 125 through a plurality of pads, the functions of the external expansion pins of the controller 120 are customized and multiplexed, achieving the purpose of customizing vehicle functions.

In some embodiments, as shown in FIG. 5, the integrated direct-drive thermal management controller architecture for a vehicle further includes a vehicle heat dissipation plate 310, the low-voltage battery 300 is disposed on a first side of the vehicle heat dissipation plate 310, and the circuit board 125 is disposed on a second side of the vehicle heat dissipation plate 310, where the second side of the vehicle heat dissipation plate 310 is opposite to the first side of the vehicle heat dissipation plate 310, and the vehicle heat dissipation plate 310 is configured to dissipate heat for the circuit board 125 and the low-voltage battery 300.

In this embodiment, the circuit board 125 and the low-voltage battery 300 are respectively disposed on two sides of the same vehicle heat dissipation plate 310. By sharing the same vehicle heat dissipation plate 310 for the circuit board 125 and the low-voltage battery 300, the heat dissipation efficiency inside the vehicle can be improved, and the volume of the vehicle can be reduced.

In this embodiment, the thermal drive device on the circuit board 125 is connected to the thermal management load, and the thermal management load is disposed at multiple positions in the entire vehicle. By integrating the battery management module 100 and the thermal management module 900 on the circuit board 125, not only the wiring harness length between the thermal drive device and the controller 120 can be reduced, but also temperature management of the low-voltage battery 300 can be performed by integrating related thermal drive device on the circuit board 125, reducing the signal transmission distance and reducing the volume of the vehicle.

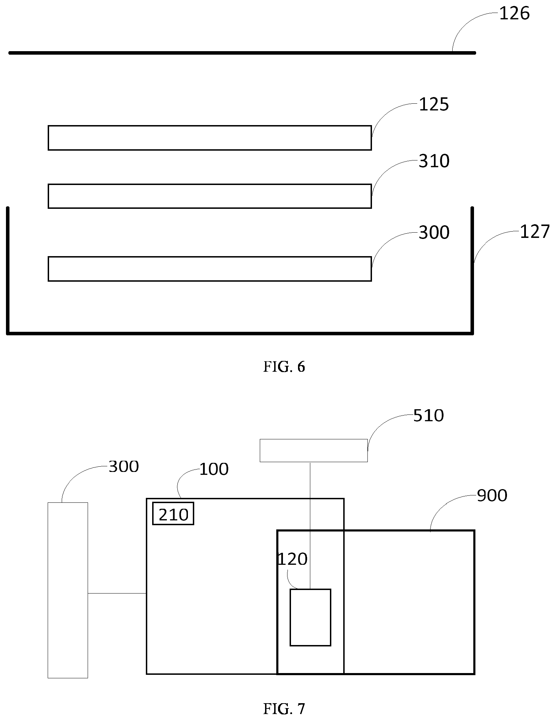

In some embodiments, as shown in FIG. 6, the low-voltage battery 300 is disposed in a product lower cover 127, where the product lower cover 127 has a concave structure, the product lower cover 127 is detachably connected to a product upper cover 126, and the product lower cover 127 and the product upper cover 126 form an accommodating cavity after assembly and connection. The circuit board 125, the vehicle heat dissipation plate 310, and the low-voltage battery 300 are stacked, and the circuit board 125 and the vehicle heat dissipation plate 310 are fixed by a mounting structure, where the distance between the circuit board 125, the vehicle heat dissipation plate 310, and the low-voltage battery 300 may be set according to heat dissipation requirements and wiring harness requirements.

In some embodiments, the vehicle heat dissipation plate 310 may be a water cooling plate, and the water cooling plate is disposed between the circuit board 125. After the automobile is started, the water cooling plate absorbs heat dissipated by the circuit board 125, improving the space utilization efficiency inside the vehicle and reducing the size and volume of the vehicle power distribution system.

In some embodiments, the sampling module 520 may also sample the temperature of a plurality of sampling nodes provided in the low-voltage battery 300, the battery management module 100, and the thermal management module 900 to obtain a corresponding sampling signal, and the controller 120 determines whether the temperature of the sampling node corresponding to the sampling signal meets the working condition of the current working state according to the received sampling signal, thereby controlling the working states of the battery management module 100 and the thermal management module 900, so that the battery management module 100 and the thermal management module 900 can adjust the working states thereof in real time according to the temperature of sampling nodes thereof, reducing the safety hazard caused by line failure.

In some embodiments, the controller 120 includes at least two cores, and multiple functions of the controller 120 can be allocated to multiple cores, improving the processing efficiency of the controller 120.

In this embodiment, after the battery management module 100 and the thermal management module 900 reuse the same controller 120, the data collected by the sampling module 520 may be directly output to the controller 120 and uniformly processed by the controller 120. This eliminates the need for a higher-level processor to issue messages via a CAN bus and prevents external interference, reducing the risk of information loss caused by message failure.

In some embodiments, at least one core of the controller 120 is configured to process a sampling signal of the low-voltage battery 300 to obtain sampling data, and at least one core of the controller 120 is configured to generate control data according to the sampling data and output a corresponding control signal based on the control data to control the working state of the low-voltage battery 300.

In this embodiment, the controller 120 includes at least two cores, one or part of the cores can be configured to process the sampling signal to obtain corresponding sampling data, and the other core or another part of the cores can be configured to process the sampling data, obtain control data according to a preset operation, generate a control signal based on the control data and output the control signal to the peripheral drive device, and control the working state of the low-voltage battery 300 by controlling the working state of the drive device.

In some embodiments, at least one core of the controller 120 is configured to process a sampling signal of the thermal management load to obtain sampling data, and at least one core of the controller 120 is configured to generate control data according to the sampling data and output a corresponding control signal based on the control data to control the thermal drive devices and drive devices on the periphery of the controller 120, achieving management of the low-voltage battery 300 and the low-voltage drive load.

In this embodiment, the controller 120 includes at least two cores, one or part of the cores can be configured to process the sampling signal to obtain corresponding sampling data, and the other core or another part of the cores can be configured to process the sampling data, obtain control data according to a preset operation, generate a control signal based on the control data and output the control signal to the peripheral drive device, and control the working states of the low-voltage battery 300 and the low-voltage drive load by controlling the working states of the thermal drive devices and the drive devices.

In some embodiments, at least one core of the controller 120 is configured to process a sampling signal of the thermal management module 900 to obtain sampling data, and at least one core of the controller 120 is configured to generate control data according to the sampling data and output a corresponding control signal based on the control data to control the power distribution power of the thermal management load.

In this embodiment, the controller 120 includes at least two cores, one or part of the cores can be configured to process the sampling signal to obtain corresponding sampling data, and the other core or another part of the cores can be configured to process the sampling data, obtain control data according to a preset operation, generate a control signal based on the control data and output the control signal to the peripheral thermal drive device, and control the working state of the thermal management load by controlling the working state of the thermal drive device.

In some embodiments, the battery management module 100 manages the charging and discharging process of the low-voltage battery 300, the thermal management module 900 controls the working state of the thermal management load, and the battery management module 100 and the thermal management module 900 reuse the same controller 120. The power supply module of the battery management system and the power supply module of the thermal management system may be integrated into one, and the communication module of the battery management system and the communication module of the thermal management system may be integrated into one. Under the simultaneous management and control of the controller 120 on the thermal management load and the low-voltage battery 300, the entire vehicle functions are highly concentrated, and some functional modules are reused, greatly reducing the cost of the entire vehicle.

In some embodiments, as shown in FIG. 7, the integrated direct-drive thermal management controller architecture for a vehicle includes an SBC power supply module 510, where the SBC power supply module 510 is connected to the controller 120, and the SBC power supply module 510 is configured to supply power to the controller 120.

In this embodiment, the SBC power supply module 510 in the integrated direct-drive thermal management controller architecture for a vehicle may be integrated in the battery management module 100 or the battery management module 100, or may be integrated in the thermal management module 900, and the power source of the SBC power supply module 510 may be the low-voltage battery 300.

In some embodiments, a power input terminal of the SBC power supply module 510 is respectively connected to the low-voltage battery 300 and the low-voltage power input terminal 400, and a power output terminal of the SBC power supply module 510 is connected to the controller 120.

In this embodiment, the power input terminal of the SBC power supply module 510 may obtain power from the low-voltage battery 300 or the low-voltage power input terminal 400 respectively, and convert the voltage input from the low-voltage battery 300 or the low-voltage power input terminal 400 into the power supply voltage of the controller 120, achieving the purpose of supplying power to the controller 120 and avoiding the problem of additional wiring harness required for the controller 120 to obtain power from an external power supply.

In some embodiments, the power input terminal of the SBC power supply module 510 may be simultaneously connected to the low-voltage battery 300 and the low-voltage power input terminal 400, a reverse current protection circuit is provided between the power input terminal of the SBC power supply module 510 and the low-voltage battery 300, and a reverse current protection circuit is provided between the power input terminal of the SBC power supply module 510 and the low-voltage power input terminal 400, which can prevent reverse current generated when the low-voltage battery 300 and the low-voltage power input terminal 400 output current, improving the safety of the power supply circuit.

A power management chip (System Base Chip, SBC) is a provider of working voltage for the controller 120 and its peripheral devices. Without SBC power supply, the peripheral devices of the controller cannot work. In this embodiment, the controller 120 and a part of power devices form the battery management module 100, the controller 120 and a part of thermal management drive units form the thermal management module 900, and the controller 120 integrates functions of managing the low-voltage battery 300 and a function of power distribution control on the low-voltage load. Therefore, the SBC power supply module 510 outputs multiple voltages according to the input power supply, which can supply power to the controller 120 and its peripheral power devices. Only one SBC chip is required to supply power to the components of the entire vehicle low-voltage power distribution system and the entire vehicle thermal management system, which not only saves SBC chips, but also optimizes the power management solution of the low-voltage power distribution system. This reduces the problem of performance instability caused by inconsistent power supply voltages in the independent SBC solution, and improves the working consistency of power devices and chips in the low-voltage power distribution system. For example, the SBC power supply module 510 outputs an independent 3.3 V power supply to the controller 120, and may also respectively output an independent 3.3 V power supply to analog chips on the circuit board 125 and an independent 5 V power supply to communication chips on the circuit board 125. The input power supply of the SBC power supply module 510 is consistent, which can improve the consistency of its output voltage.

In some embodiments, the controller 120 controls a plurality of load connection terminals 210 of the battery management module 100 to be powered on in a time-sharing manner when a plurality of power-consuming loads are connected to the load connection terminal 210.

In this embodiment, a plurality of load connection terminals 210 of the battery management module 100 may respectively connect a plurality of power-consuming loads. When a plurality of power-consuming loads are connected, the controller 120 controls the plurality of load connection terminals 210 to be powered on in a time-sharing manner, which can improve the output current of the battery management module 100 and avoid the safety hazard caused by excessive output current when a plurality of load connection terminals 210 are powered on simultaneously.

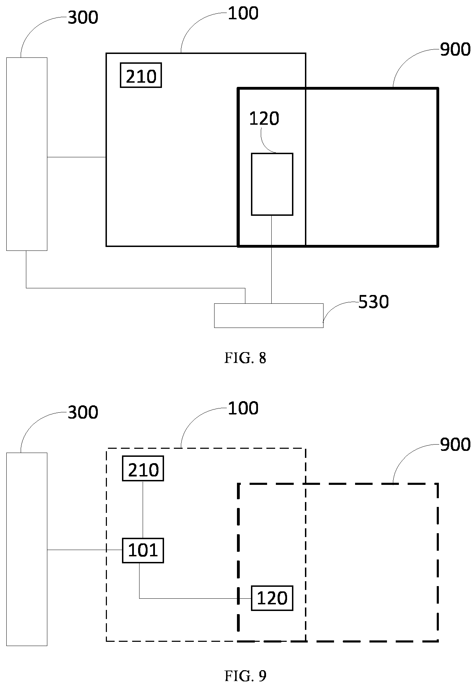

In some embodiments, as shown in FIG. 8, the integrated direct-drive thermal management controller architecture for a vehicle further includes an AFE module 530, where the AFE module 530 is respectively connected to the low-voltage battery 300 and the controller 120, and the AFE module 530 is configured to perform information collection on the low-voltage battery 300 and perform information interaction with the controller 120.

In this embodiment, the AFE module 530 is simultaneously connected to the low-voltage battery 300 and the controller 120, information collection may be performed on the low-voltage battery 300 through the AFE module 530, and information interaction is performed with the controller 120.

In some embodiments, the controller 120 is connected to the AFE module 530 through a non-multiplexed synchronous serial communication interface.

In this embodiment, the controller 120 is connected to the AFE module 530 through a non-multiplexed synchronous serial communication interface, which can establish high-speed full-duplex communication between the controller 120 and the AFE module 530. The data pin of the controller 120 performs data transmission of a set type. For example, each communication module corresponds to an interactive function module, which is not affected by other pins or modules.

In some embodiments, as shown in FIG. 9, the battery management module 100 includes a first switch module 101, where the first switch module 101 is controlled by the controller 120, and the low-voltage battery 300 is electrically connected to the battery management module 100 via the first switch module 101.

In this embodiment, the first switch module 101 is connected between the low-voltage battery 300 and the battery management module 100, the first switch module 101 is controlled by the controller 120, and the controller 120 controls the switch state of the first switch module 101 to perform the charging and discharging operation of the low-voltage battery 300, so that the battery management module 100 can reuse the first switch module 101, reducing the wiring harness between the battery management module 100 and the battery management module 100 and reducing the safety hazard caused by short circuit of the wiring harness between different circuit boards.

In some embodiments, the output voltage range of the low-voltage battery 300 is 12 V to 72 V.

In some embodiments, the low-voltage battery 300 includes a 12-volt lithium-ion battery or sodium-ion battery, or other rechargeable battery.

In some embodiments, the low-voltage battery 300 includes a 24-volt lithium-ion battery or sodium-ion battery, or other rechargeable battery.

In some embodiments, the low-voltage battery 300 includes a 48-volt lithium-ion battery or sodium-ion battery, or other rechargeable battery.

In some embodiments, the low-voltage battery 300 includes a 72 V lithium-ion battery or sodium-ion battery, or other rechargeable battery.

In this embodiment, the integrated direct-drive thermal management controller architecture for a vehicle in the embodiments of the present application may be applied to fuel vehicles and new energy vehicles, where the output voltage of the low-voltage battery in the vehicle does not exceed 72 V.

The embodiments of the present application further provide a vehicle management system, where the vehicle management system includes the integrated direct-drive thermal management controller architecture for a vehicle according to any one of the above embodiments.

The vehicle management system in this embodiment may be applied to low-voltage batteries configured in fuel vehicles and new energy vehicles, and is not limited to the field of passenger vehicles or commercial vehicles.

The embodiments of the present application further provide an automobile, where the automobile includes the integrated direct-drive thermal management controller architecture for a vehicle according to any one of the above embodiments.

In this embodiment, by integrating the integrated direct-drive thermal management controller architecture for a vehicle described in any one of the above embodiments in an automobile, the battery management module and the thermal management module may be integrated into one structural member, and the battery management module and the thermal management module reuse the same controller, optimizing the electrical architecture of the vehicle power distribution system, simplifying related components of the entire vehicle, and greatly reducing the cost of the entire vehicle.

A person skilled in the art may clear that, for ease and brevity of description, only division into the foregoing function units and modules is used as an example for description; in actual application, the foregoing functions may be allocated, depending on a requirement, to different function units and modules for implementation, that is, an internal structure of the apparatus is divided into different function units and modules to implement all or some of the functions described above. The functional units and modules in the embodiments may be integrated into one processing module, or each of the units may exist alone physically, or two or more units may be integrated into one unit. In addition, the specific names of the functional units and modules are only for the purpose of distinguishing each other and are not used to limit the protection scope of the present application. For a detailed operating process of the units and modules in the above system, reference may be made to a corresponding process in the foregoing method embodiments, and details are not described herein again.

In the foregoing embodiments, the description of each embodiment has its own emphasis, and some embodiments, which are not described or described in detail in a certain embodiment, may be referred to the relevant description of other embodiments.

In the embodiments provided in the present application, it should be understood that the disclosed device and method may be implemented in other ways. For example, the electronic device embodiments described above are merely illustrative. For example, the division of modules or units is merely logical function division and other division manners may be used in actual implementation. For example, a plurality of units or components may be combined or integrated into another system, or some features may be ignored or not be performed. In addition, the displayed or discussed mutual couplings or direct couplings or communications connections may be implemented by using some interfaces. The indirect couplings or communications connections between the apparatuses, modules, or units may be implemented in electronic, mechanical, or other forms.

The units described as separate parts may or may not be physically separated. Parts displayed as units may or may not be physical units, meaning they may be located in one position or distributed on a plurality of network units. Some or all of the units may be selected based on actual requirements to achieve the objectives of the solutions of the embodiments.

In addition, function units in all the embodiments of the present application may be integrated into one processing unit, or each of the units may exist alone physically, or two or more units may be integrated into one unit. The above integrated unit may be implemented in a form of hardware, or may be implemented in a form of a software function unit.

The foregoing embodiments are merely for describing the technical solutions of the present application rather than for limiting the present application. Although the present application has been described in detail with reference to the foregoing embodiments, persons of ordinary skill in the art should appreciate that they can still make modifications to the technical solutions described in the embodiments or make equivalent replacements to some of the technical features thereof without departing from the scope of the technical solutions of the embodiments of the present application. All such modifications and equivalent replacements shall fall within the scope of the present application.

## Claims

1. An integrated direct-drive thermal management controller architecture for a vehicle, **characterized by** comprising: a low-voltage battery, a battery management module, and a thermal management module; wherein
the low-voltage battery is electrically connected to the battery management module;
the thermal management module is configured with a load connection terminal for connecting a thermal management load; and
the battery management module and the thermal management module share the same controller, and the controller integrates functions of managing the low-voltage battery and the thermal management load.

2. The integrated direct-drive thermal management controller architecture for a vehicle according to claim 1, **characterized in that** the battery management module further comprises: a first switch module controlled by the controller; wherein
the first switch module is configured to manage a charging and discharging process of the low-voltage battery under the control of the controller.

3. The integrated direct-drive thermal management controller architecture for a vehicle according to claim 2, **characterized in that** the low-voltage battery is electrically connected to the thermal management module via the first switch module.

4. The integrated direct-drive thermal management controller architecture for a vehicle according to claim 1, **characterized in that** the controller is further connected to the thermal management load, and the controller is configured to send a thermal management control signal to the thermal management load to manage the thermal management load.

5. The integrated direct-drive thermal management controller architecture for a vehicle according to claim 1, **characterized in that** the thermal management module further comprises: a plurality of thermal management drive units; wherein
the thermal management drive units are configured to manage the thermal management load according to a thermal management control instruction sent by the controller.

6. The integrated direct-drive thermal management controller architecture for a vehicle according to claim 5, **characterized in that** the thermal management module further comprises: a thermal management power distribution unit; wherein
the thermal management power distribution unit is connected to the battery management module, and the thermal management power distribution unit is configured to perform power distribution management on the plurality of thermal management drive units according to the power distribution instruction sent by the controller.

7. The integrated direct-drive thermal management controller architecture for a vehicle according to claim 5, **characterized in that** the thermal management module further comprises: a plurality of sensor units; wherein
the plurality of sensor units are configured to sample sampling nodes in the thermal management load to obtain a thermal management sampling signal and send the thermal management sampling signal to the controller; and the controller is further configured to adjust the state of the thermal management drive unit according to the thermal management sampling signal.

8. The integrated direct-drive thermal management controller architecture for a vehicle according to claim 5, **characterized in that** the plurality of thermal management drive units comprise at least one of a motor water pump control unit, a battery water pump control unit, an air conditioning water pump control unit, a fan control unit, a water valve control unit, an intake grille control unit, an expansion valve control unit, a cutoff valve control unit, a stepper motor control unit, and a blower control unit;
the motor water pump control unit is controlled by the controller and is configured to control and drive a motor water pump;
the battery water pump control unit is controlled by the controller and is configured to control and drive a battery water pump;
the air conditioning water pump control unit is controlled by the controller and is configured to control and drive an air conditioning water pump;
the fan control unit is controlled by the controller and is configured to control and drive an electronic fan;
the water valve control unit is controlled by the controller and is configured to control and drive a water valve;
the intake grille control unit is controlled by the controller and is configured to control and drive an active intake grille;
the expansion valve control unit is controlled by the controller and is configured to control and drive an expansion valve;
the cutoff valve control unit is controlled by the controller and is configured to control and drive a cutoff valve;
the stepper motor control unit is controlled by the controller and is configured to control and drive a single/bipolar stepper motor damper; and
the blower control unit is controlled by the controller and is configured to control and drive a blower.

9. The integrated direct-drive thermal management controller architecture for a vehicle according to claim 1, **characterized in that** the integrated direct-drive thermal management controller architecture for a vehicle further comprises:
a sampling module, configured to perform voltage sampling and/or current sampling on sampling nodes of the battery management module and the thermal management module and generate an electrical parameter sampling signal; and
the controller is connected to the sampling module, and the controller is further configured to control the working state of the low-voltage battery according to the electrical parameter sampling signal.

10. The integrated direct-drive thermal management controller architecture for a vehicle according to claim 9, **characterized in that** the controller is further configured to control the working state of the thermal management module according to the electrical parameter sampling signal.

11. The integrated direct-drive thermal management controller architecture for a vehicle according to claim 9, **characterized in that** the sampling module is further configured to perform temperature sampling on sampling nodes of the low-voltage battery and the thermal management load to obtain a temperature sampling signal; and
the controller is further configured to control the working state of the low-voltage battery according to the temperature sampling signal.

12. The integrated direct-drive thermal management controller architecture for a vehicle according to claim 1, **characterized in that** the integrated direct-drive thermal management controller architecture for a vehicle further comprises:
a low-voltage power input terminal electrically connected to the battery management module, configured to connect a low-voltage power supply converted from a power battery; and
the battery management module is further configured to perform charging and discharging control on the low-voltage battery according to the low-voltage power supply.

13. The integrated direct-drive thermal management controller architecture for a vehicle according to claim 1, **characterized in that** the battery management module and the thermal management module are integrated on the same circuit board.

14. The integrated direct-drive thermal management controller architecture for a vehicle according to claim 13, **characterized in that** the integrated direct-drive thermal management controller architecture for a vehicle further comprises a vehicle heat dissipation plate; the circuit board is disposed on a first side of the vehicle heat dissipation plate, and the low-voltage battery is disposed on a second side of the vehicle heat dissipation plate, wherein the second side of the vehicle heat dissipation plate is opposite to the first side of the vehicle heat dissipation plate.

15. The integrated direct-drive thermal management controller architecture for a vehicle according to any one of claims 1 to 14, **characterized in that** the controller has at least two cores.

16. The integrated direct-drive thermal management controller architecture for a vehicle according to claim 15, **characterized in that** at least one core of the controller is configured to process a sampling signal to obtain sampling data, and at least one core of the controller is configured to generate control data according to the sampling data and output a corresponding control signal based on the control data to control the working state of the low-voltage battery and/or control the working state of the thermal management load.

17. The integrated direct-drive thermal management controller architecture for a vehicle according to any one of claims 1 to 14, **characterized in that** the battery management module comprises:
an SBC power supply module connected to the controller, configured to supply power to the controller; wherein
a power input terminal of the SBC power supply module is respectively connected to the low-voltage battery and a low-voltage power input terminal, and a power output terminal of the SBC power supply module is connected to the controller.

18. The integrated direct-drive thermal management controller architecture for a vehicle according to any one of claims 1 to 14, **characterized in that** the controller controls a plurality of load connection terminals of the battery management module to be powered on in a time-sharing manner when a plurality of thermal management loads are connected to the load connection terminal.

19. The integrated direct-drive thermal management controller architecture for a vehicle according to any one of claims 1 to 14, **characterized by** further comprising: an AFE module respectively connected to the low-voltage battery and the controller, configured to perform information collection on the low-voltage battery and perform information interaction with the controller.

20. The integrated direct-drive thermal management controller architecture for a vehicle according to claim 19, **characterized in that** the controller is connected to the AFE module through a non-multiplexed synchronous serial communication interface.

21. A vehicle management system, **characterized in that** the vehicle management system comprises the integrated direct-drive thermal management controller architecture for a vehicle according to any one of claims 1 to 20.

22. An automobile, **characterized in that** the automobile comprises the integrated direct-drive thermal management controller architecture for a vehicle according to any one of claims 1 to 19.
